Europäisches Patentamt

European Patent Office

Office européen des brevets

(19)

(11) Veröffentlichungsnummer: **0 080 561**
A1

(12) **EUROPÄISCHE PATENTANMELDUNG**

(21) Anmeldenummer: 82107841.7

(22) Anmeldetag: 26.08.82

(51) Int. Cl.³: **B 60 G 11/26**
**F 16 F 9/04**

(30) Priorität: 28.11.81 DE 3147231

(43) Veröffentlichungstag der Anmeldung:
08.06.83 Patentblatt 83/23

(84) Benannte Vertragsstaaten:
FR GB IT NL

(71) Anmelder: Bergische Achsenfabrik Fr. Kotz & Söhne
Am Ohlerhammer
D-5276 Wiehl 1(DE)

(72) Erfinder: Steiner, Helmut
Freiherr-vom-Stein-Strasse 1
D-5276 Wiehl(DE)

(74) Vertreter: Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11(DE)

(54) **Luftfeder.**

(57) Gegenstand der Erfindung ist eine Luftfeder (5) für Luftfederachsen mit einem Deckel (6) und einem Tauchkolben (8) sowie einem dazwischen eingesetzten Rollbalg (7), der mit seinen Dichtwülsten (10, 14) Dichtringen (9, 13) am Deckel (6) und Tauchkolben (8) anliegt, wobei der Dichtwulst (14) am Dichtring (13) des Tauchkolbens (8) mit einem am Boden (12) des Tauchkolbens (8) lösbar befestigten Formblech (15) eingespannt ist, während der Dichtwulst (10) des Rollbalges (7) am Dichtring (9) des Deckels (6) lösbar eingespannt ist. Um den Rollbalg selbst als Fangvorrichtung zur Begrenzung des maximalen Federweges nutzbar zu machen, wird vorgeschlagen, daß die Befestigung des Dichtwulstes (10) des Rollbalges (7) am Dichtring (9) des Deckels (6) ausschließlich mittels eines Sprengringes (11) erfolgt.

Fig 3

EP 0 080 561 A1

- 1 -

# L u f t f e d e r

Gegenstand der Erfindung ist eine Luftfeder für Luftfederachsen mit einem Deckel und einem Tauchkolben sowie einem dazwischen eingesetzten Rollbalg, der mit
seinen Dichtwülsten Dichtringen am Deckel und Tauchkolben anliegt, wobei der Dichtwulst am Dichtring des
Tauchkolbens mit einem am Boden des Tauchkolbens lösbar befestigten Formblech eingespannt ist, während
der Dichtwulst des Rollbalges am Dichtring des Deckels
lösbar eingespannt ist.

Luftfedern der vorstehend beschriebenen Gattung sind
bekannt und werden beispielsweise bei Nutzfahrzeugen
zwischen dem Fahrzeugrahmen und den Achsen eingebaut,
wobei der Deckel am Fahrzeugrahmen und der Tauchkolben mit seinem Boden an einem verlängerten Lenker der
Achse befestigt sind. Bei diesen bekannten Luftfedern
besteht die Gefahr, daß der Rollbalg beim Ausfedern
von den Dichtringen am Deckel und Kolben abgezogen
wird. Deshalb muß der maximale Federweg mit einer
Fangvorrichtung für die Achse, beispielsweise einem
am Fahrzeugrahmen befestigten Fangseil begrenzt
werden.

Aus der GB-PS 12 48 025 ist schon eine Luftfeder bekannt geworden, deren Rollbalg am Deckel mittels eines Formbleches eingespannt ist. Hierbei handelt es sich um denjenigen Stand der Technik, bei dem der maximale Federweg bei einer Anwendung in Luftfederachsen mit einer Fangvorrichtung für die Achse begrenzt werden muß.

Außerdem ist aus der GB-PS 10 71 931 eine Luftfeder für Luftfederachsen bekannt, bei der ein Dichtwulst eines Rollbalges unter Zwischenlage eines Profilringes mit Hilfe eines Sprengringes lösbar eingespannt ist. Im übrigen unterscheidet sich die bekannte Luftfederkonstruktion aber dadurch von der Erfindung, daß Zugkräfte nicht auf den Rollbalg übertragen werden können, weil der maximale Federweg kleiner als die ausgezogene Länge des Rollbalges ist.

Davon ausgehend liegt der Erfindung die A u f g a b e zugrunde, die Luftfeder so zu verbessern, daß der weiterhin lösbar am Deckel und Tauchkolben befestigte Rollbalg den maximalen Federweg bestimmt und gleichzeitig die Funktion einer Fangvorrichtung übernimmt.

Zur L ö s u n g dieser Aufgabe wird vorgeschlagen, daß die Befestigung des Dichtwulstes des Rollbalges am Dichtring des Deckels ausschließlich mittels eines Sprengringes erfolgt.

Eine erfindungsgemäß ausgebildete Luftfeder hat den Vorteil, daß der weiterhin aus montagetechnischen Gründen am Deckel und Tauchkolben lösbar befestigte Rollbalg gleichzeitig die Funktion der bekannten Fang-

- 3 -

vorrichtung übernehmen kann, so daß deren zusätzlicher Einbauaufwand beim Achs- oder Fahrzeughersteller entfällt.

Weitere Einzelheiten und Vorteile des Gegenstandes der Erfindung ergeben sich aus der nachfolgenden Beschreibung der zugehörigen Zeichnungen, in denen eine erfindungsgemäß ausgebildete Luftfeder schematisch dargestellt worden ist. In den Zeichnungen zeigen:

Fig. 1          eine Luftfederachse in teilweise eingefederter Lage in Seitenansicht;

Fig. 2          dieselbe Luftfederachse in ausgefederter Lage in Seitenansicht;

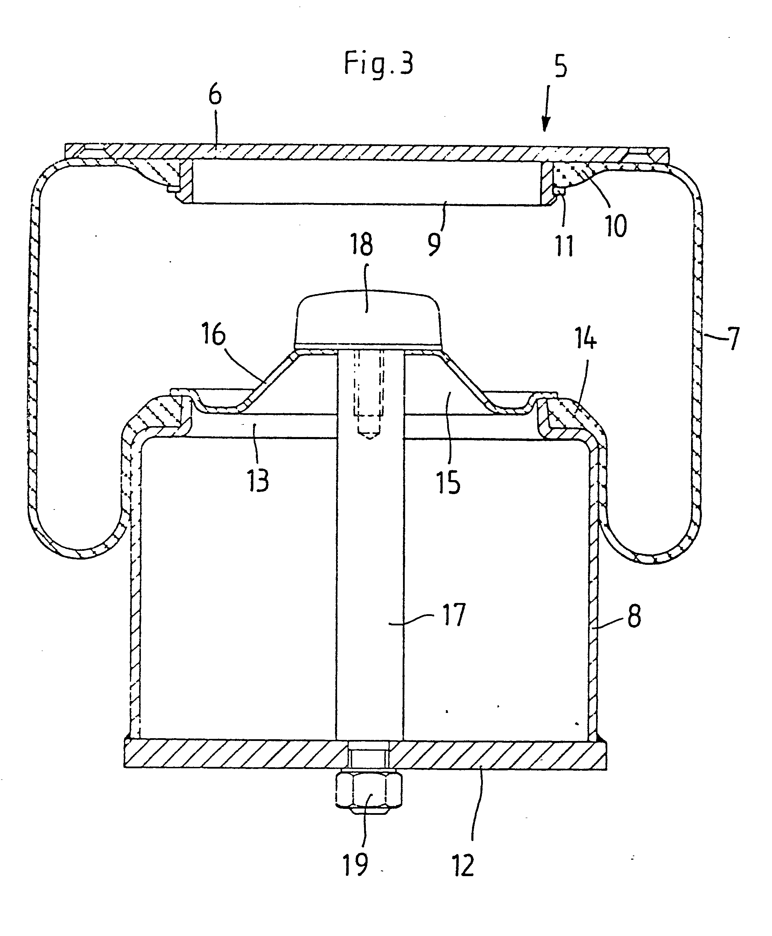

Fig. 3          eine Luftfeder im Querschnitt.

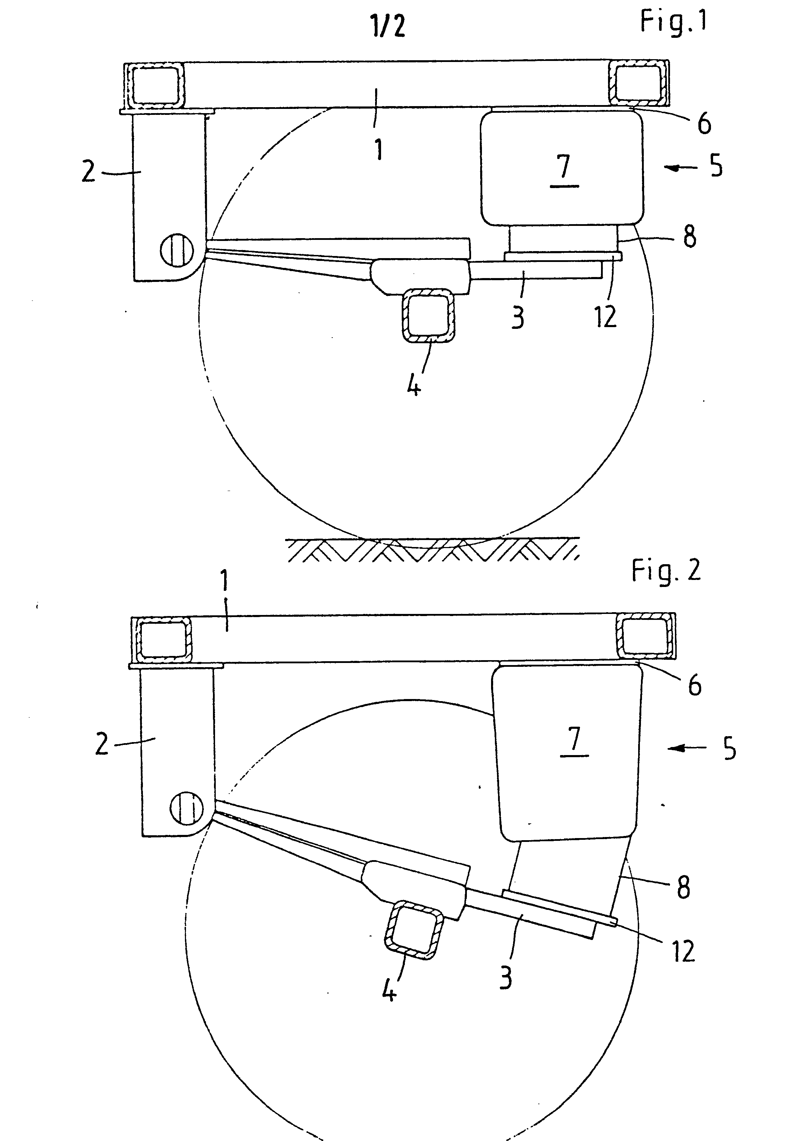

Bei der in den Fig. 1 und 2 dargestellten Luftfederachse ist zwischen einem Teil eines Fahrzeugrahmens 1 und einem über eine Konsole 2 schwenkbar angelenkten Längslenker 3 für eine Achse 4 eine Luftfeder 5 eingebaut.

Die Luftfeder 5 besteht im Prinzip aus einem am Fahrzeugrahmen 1 befestigten Deckel 6, einem Rollbalg 7 und einem am Längslenker 3 befestigten Tauchkolben 8.

Der Deckel 6 besitzt einen nach innen vorkragenden Dichtring 9, an dem der Rollbalg 7 mit einem Dichtwulst 10 anliegt und mit einem Sprengring 11 lösbar befestigt ist.

Der Tauchkolben 8 ist topfförmig ausgebildet und besitzt einen geschlossenen Boden 12. Am inneren, offenen Ende besitzt der Tauchkolben 8 einen Dichtring 13, dem der Rollbalg 7 mit einem Dichtwulst 14 anliegt. Der Dichtwulst 14 ist auf dem Dichtring 13 mit einem Formblech 15 lösbar eingespannt, welches Öffnungen 16 für den Luftdurchtritt besitzt. Durch das Formblech 15 und den Boden 12 des Tauchkolbens 8 ist ein Bolzen 17 geführt, dessen inneres Ende einen als Puffer 18 ausgebildeten Kopf trägt und dessen äußeres Ende mit einer Mutter 19 gegen den Boden 12 verspannt ist.

Die Montage bzw. Demontage der Luftfeder erfolgt folgendermaßen:

Zunächst wird der Rollbalg 7 auf den Dichtring 9 des Deckels 6 aufgezogen und dort mit dem Sprengring 11 befestigt. Danach wird das Formblech 15 mit dem bereits eingesetzten Bolzen 17 in die noch freie Öffnung des Rollbalges 7 eingeführt. Danach kann dann der Dichtwulst 14 des Rollbalges 7 mit Hilfe des durch den Boden 12 herausgeführten Bolzens 17 und des Formbleches 15 auf den Dichtring 13 des Tauchkolbens 8 aufgezogen und an diesem mit der Mutter 19 lösbar eingespannt werden. Die Demontage des Rollbalges erfolgt in umgekehrter Reihenfolge.

Bezugszeichenliste:

| 1 | Fahrzeugrahmen |
|----|----|
| 2 | Konsole |
| 3 | Längslenker |
| 4 | Achse |
| 5 | Luftfeder |
| 6 | Deckel |
| 7 | Rollbalg |
| 8 | Tauchkolben |
| 9 | Dichtring |
| 10 | Dichtwulst |
| 11 | Sprengring |
| 12 | Boden |
| 13 | Dichtring |
| 14 | Dichtwulst |
| 15 | Formblech |
| 16 | Öffnung |
| 17 | Bolzen |
| 18 | Puffer |
| 19 | Mutter |

- 6 -

A n s p r u c h :

Luftfeder für Luftfederachsen mit einem Deckel und einem Tauchkolben sowie einem dazwischen eingesetzten Rollbalg, der mit seinen Dichtwülsten Dichtringen am Deckel und Tauchkolben anliegt, wobei der Dichtwulst am Dichtring des Tauchkolbens mit einem am Boden des Tauchkolbens lösbar befestigten Formblech eingespannt ist, während der Dichtwulst des Rollbalges am Dichtring des Deckels lösbar eingespannt ist, d a d u r c h   g e k e n n z e i c h n e t , daß die Befestigung des Dichtwulstes (10) des Rollbalges (7) am Dichtring (9) des Deckels (6) ausschließlich mittels eines Sprengringes (11) erfolgt.

0080561
Fig.1

Fig. 2

Fig.3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.3) |
|---|---|---|---|
| | --- | | B 60 G 11/26 |
| A | US-A-2 922 637 (BOWSER) * Insgesamt * | 1 | F 16 F 9/04 |
| | --- | | |
| A | DE-B-1 147 127 (GENERAL MOTORS) * Figuren 1,2 * | 1 | |
| | --- | | |
| A | DE-A-3 017 733 (CONTINENTAL GUMMI) | | |
| | --- | | |
| A | DE-A-1 956 811 (GOODYEAR) | | |
| | --- | | |
| A | DE-B-1 285 792 (CONTINENTAL GUMMI) | | |
| | --- | | RECHERCHIERTE SACHGEBIETE (Int Cl.3) |
| A | DE-B-1 126 746 (DAIMLER BENZ) | | |
| | --- | | B 60 G |
| A | DE-B-1 078 882 (CONTINENTAL GUMMI) | | F 16 F |
| | | | F 16 J 3/04 |
| | --- | | B 66 F 3/35 |
| D,A | GB-A-1 248 025 (ORSZAGOS GUMIIPARI VALLALAT) | | F 15 B 15/10 |
| | --- | | |
| D,A | GB-A-1 071 931 (BOSCH) | | |
| | ----- | | |

Der vorliegende Recherchenbericht wurde für alle Patentansprüche erstellt.

| Recherchenort DEN HAAG | Abschlußdatum der Recherche 22-12-1982 | Prüfer ESPEEL R.P. |
|---|---|---|